# EUROPÄISCHE PATENTSCHRIFT

(11) **EP 0 570 620 B1**
(45) Veröffentlichungstag und Bekanntmachung des Hinweises auf die Patenterteilung: **10.07.1996**
(21) Anmeldenummer: 92115407.6
(22) Anmeldetag: 09.09.1992
(51) Int. Cl.: A47B 21/03, F16B 12/12

(54) **Vorrichtung zur Befestigung einer belastbaren starren Halteplatte an einer Möbelfläche**
Device for attaching a rigid support to a furniture surface
Dispositif pour la fixation d'un plateau de support rigide à une surface d'un meuble

(30) Priorität: 19.05.1992 DE 4216515
(43) Veröffentlichungstag der Anmeldung: 24.11.1993
(73) Patentinhaber: Steinhilber, Helmut, CH-6052 Hergiswil (CH)
(72) Erfinder: Steinhilber, Helmut, CH-6052 Hergiswil (CH)
(74) Vertreter: Patentanwälte Westphal, Buchner, Mussgnug Neunert, Göhring

(56) Entgegenhaltungen:
- WO-A-81/02248

## Beschreibung

Die Erfindung betrifft eine Vorrichtung zur Befestigung einer belastbaren starren Halteplatte an einer Möbelfläche gemäß dem Oberbegriff des Patentanspruchs 1.

Bei einer aus EP 0 457 957 A1, Ausführungsbeispiel der Figur 8, bekannten Vorrichtung dieser Gattung wird eine Halteplatte flach auf eine Tischplatte aufgesetzt und an dieser mittels eines textilen Haftverschlusses befestigt, dessen einer Teil auf die Tischplatte geklebt wird. Die Halteplatte trägt eine vertikale Stützsäule, die sich zur Aufnahme unterschiedlicher Funktionselemente, beispielsweise der Platte eines Stehpultes, eines Bildschirmträgers, eines Telefonarmes, einer Leuchte oder dergleichen eignet. Dadurch ist ein Nachrüsten beliebiger Schreib- und Arbeitstische mittels der vertikalen Stützsäule möglich.

Die Befestigung der Halteplatte auf der Tischplatte hat gegenüber herkömmlichen Klemmvorrichtungen den Vorteil, daß die Befestigung von der Form der Tischplatte und des Möbels unabhängig ist. Insbesondere kann diese Art der Befestigung bei jeder Stärke der Tischplatte, bei jeder Kantenform der Tischplatte und auch bei nicht über den Korpus überragender Tischplatte verwendet werden.

Die Halteplatte kann von der Möbeloberfläche wieder entfernt werden, ohne daß diese beschädigt wird. Hierzu wird zunächst die starre Halteplatte im Bereich des Haftverschlusses abgetrennt. Dann kann der auf die Möbelfläche aufgeklebte Teil des Haftverschlusses von der Möbelfläche abgetrennt werden. Da dieser Teil flexibel ist, kann er behutsam von der Möbelfläche abgelöst werden, ohne diese zu beschädigen. Dies wäre bei einem unmittelbaren Aufkleben der starren Halteplatte auf die Möbelfläche schwierig, da die Klebverbindung gleichzeitig über die gesamte Klebefläche abgerissen werden müßte.

Das Trennen des Haftverschlusses kann jedoch insbesondere bei einem für höhere Belastungen geeigneten großflächigen Haftverschluß Schwierigkeiten bereiten, da wegen der starren Ausbildung der Halteplatte auch der Haftverschluß im wesentlichen über seine gesamte Fläche gleichzeitig getrennt werden muß. Diese Trennung ist zwar möglich, da der Haftverschluß senkrecht zu seiner Ebene eine minimale elastische Nachgiebigkeit aufweist, so daß die Halteplatte von einem Ende beginnend fortschreitend, beispielsweise mittels eines Hebelwerkzeuges, abgehoben werden kann. Diese geringe elastische Nachgiebigkeit des Haftverschlusses kann aber auch zu einen unerwünschten allmählichen Lockern der Haftverbindung führen, insbesondere wenn auf die Halteplatte über eine lange Zeit ein sehr starkes Kippmoment einwirkt.

Der Erfindung liegt das Problem zugrunde, eine Vorrichtung zur Befestigung einer starren Halteplatte an einer Möbelfläche zu schaffen, die eine hohe Belastbarkeit mit einer einfachen Lösbarkeit der Befestigung vereinigt.

Dieses Problem wird erfindungsgemäß gelöst durch eine Vorrichtung mit den Merkmalen des Patentanspruchs 1.

Vorteilhafte Ausführungen der Erfindung sind in den Unteransprüchen angegeben.

Bei der erfindungsgemäßen Vorrichtung wird die Halteplatte an der Möbelfläche, beispielsweise auf der Tischplatte eines Arbeits- oder Schreibtisches befestigt. Die Halteplatte ragt dabei nicht über den Rand der Möbelfläche hinaus, so daß eine Befestigung an jeder beliebigen Möbelfläche, unabhängig von der Form des Möbelstückes, und in jedem beliebigen Bereich der Möbelfläche möglich ist. Alle Vorteile der bekannten Befestigung sind somit in gleicher Weise erfüllt.

Auf die Möbelfläche wird ein Verankerungsteil aufgeklebt, wozu vorzugsweise ein lösbarer Klebstoff verwendet wird. Die Halteplatte wird an diesem Verankerungsteil formschlüssig befestigt. Die formschlüssige Verriegelung der starren Halteplatte mit dem Verankerungsteil ermöglicht ein einfaches Befestigen der Halteplatte an dem Verankerungsteil und ebenso ein leichtes Lösen der Halteplatte von dem Verankerungsteil. Das Verankerungsteil selbst, welches vorzugsweise in Form einer Verankerungsplatte ausgebildet ist, kann elastisch biegsam, verformbar oder flexibel sein, so daß es bei Bedarf relativ leicht von der Möbelfläche abgelöst werden kann, indem es von einem Rand oder einer Ecke beginnend sukzessive abgetrennt und abgeschält wird. Gegebenenfalls kann hierzu auch ein Lösungsmittel appliziert werden.

Sobald die starre Kalteplatte mit dem Verankerungsteil verbunden ist, wird das Verankerungsteil durch die Halteplatte vollständig versteift, so daß eine Verbiegung oder Verformung des Verankerungsteils nicht mehr möglich ist. Die Klebeverbindung zwischen Verankerungsteil und Möbelfläche kann daher bei aufgesetzter Halteplatte nicht mehr fortschreitend entlang einer Trennlinie abgelöst werden, sondern eine Trennung der Klebeverbindung wäre nur noch über die gesamte Fläche der Klebeverbindung gleichzeitig möglich. Dadurch kann die Klebebefestigung der Halteplatte eine hohe Belastung insbesondere auch durch Kippmomente aufnehmen.

Die formschlüssige Verbindung der Halteplatte mit dem Verankerungsteil ermöglicht ein einfaches Wegnehmen der Halteplatte, wenn die Halteplatte und an dieser angebrachte Funktionselemente kurzzeitig entfernt werden sollen oder wenn eine Halteplatte mit einem Funktionselement gegen eine Halteplatte mit einem anderen Funktionselement ausgetauscht werden soll. Soll die Vorrichtung vollständig entfernt werden, so wird nach dem Trennen der formschlüssigen Verbindung und nach dem Wegnehmen der starren Halteplatte das dann frei zugängliche und nicht mehr durch die starre Halteplatte versteifte Verankerungsteil von der Möbelfläche abgelöst, wobei das Verankerungsteil behutsam abgeschält und entlang einer wandernden Trennungslinie abgetrennt werden kann. Gegebenenfalls kann ein Lösungsmittel für den verwendeten Klebstoff durch das Verankerungsteil hindurch auf die gesamte Klebefläche oder entlang der jeweiligen Trennlinie zwischen Verankerungsteil und Möbelfläche appliziert werden.

Die formschlüssige Verbindung und Verriegelung von Halteplatte und Verankerungsteil kann in vielfältiger Weise realisiert werden. Vorzugsweise ist das Verankerungsteil als Verankerungsplatte ausgebildet, auf welche die Halteplatte flächig aufgesetzt wird. Vorsprünge und Aufnahmen der aufeinandersitzenden Flächen der Verankerungsplatte und der Halteplatte greifen hierbei formschlüssig ineinander. Die Halteplatte kann somit auf die auf die Möbelfläche geklebte Verankerungsplatte aufgesetzt und durch Verschieben verriegelt werden. Das Verankerungsteil wird dabei durch die Halteplatte vollständig abgedeckt, so daß die Befestigungsmaßnahmen unsichtbar sind und ein formschönes Aussehen gewährleistet ist.

In einer zweckmäßigen Ausführungsform ist eine großflächige Verankerungsplatte vorgesehen. Um im Bedarfsfalle ein einfaches Ablösen der Verankerungsplatte von der Möbelfläche zu erlauben, ist die Verankerungsplatte durch Sollbruchlinien unterteilt. Solange die Verankerungsplatte durch die starre Halteplatte versteift ist, sind diese Sollbruchlinien unwirksam und die gesamte Fläche der Verankerungsplatte wirkt als durchgehende Fläche der Klebeverbindung. Ist die Halteplatte weggenommen, so kann die Verankerungsplatte in den durch die Sollbruchlinien unterteilten Einzelbereichen getrennt von der Möbelfläche abgelöst werden, so daß sich jeweils eine geringere Klebefläche und damit eine leichtere Ablösung ergibt.

Im folgenden wird die Erfindung anhand von in der Zeichnung dargestellten Ausführungsbeispielen näher erläutert. Es zeigen
- Figur 1: - eine perspektivische Ansicht der Vorrichtung zur Befestigung einer Halteplatte, die eine Stützsäule trägt,
- Figur 2: - eine Ansicht der Halteplatte von unten,
- Figur 3: - einen Vertikalschnitt durch die Halteplatte gemäß der Schnittlinie III-III in Figur 2,
- Figur 4: - einen Vertikalschnitt der Verankerungsplatte gemäß der Schnittlinie IV-IV in Figur 5,
- Figur 5: - eine Ansicht der Verankerungsplatte von oben,
- Figur 6: - im Ausschnitt eine Ansicht von unten eines Vorsprungs der Halteplatte in einer zweiten Ausführung der Vorrichtung,
- Figur 7: - einen Vertikalschnitt gemäß der Linie VII-VII in Figur 6,
- Figur 8: - einen Vertikalschnitt gemäß der Linie VIII-VIII in Figur 7,
- Figur 9: - einen Vertikalschnitt einer Aufnahme der Verankerungsplatte gemäß der Schnittlinie IX-IX in Figur 11 in der zweiten Ausführung der Vorrichtung,
- Figur 10: - einen Vertikalschnitt der Aufnahme gemäß der Schnittlinie X-X in Figur 9,
- Figur 11: - eine Ansicht von oben der Aufnahme der Verankerungsplatte,
- Figur 12: - einen Vertikalschnitt durch die Vorrichtung in einer dritten Ausführung,
- Figur 13: - eine Draufsicht auf die Verankerungsplatte der Vorrichtung gemäß Figur 12,
- Figur 14: - eine Stirnansicht der Verankerungsplatte und
- Figur 15: - den Ausschnitt Z in Figur 14 in vergrößerter Darstellung.

Auf einer Möbelfläche 10, beispielsweise der Arbeitsplatte eines Schreibtisches, soll eine vertikale Stützsäule 12 befestigt werden. Die Stützsäule 12 dient dazu, Funktionselemente zu tragen, z.B. eine Stehpult-Platte, einen Bildschrim-Arm, einen Telefon-Arm, eine Tischleuchte oder dergleichen.

Am unteren Ende der Stützsäule 12 ist eine horizontale starre Halteplatte 14 angebracht. Die Stützsäule 12 und die Halteplatte 14 bestehen aus einem geeigneten Material, beispielsweise Metallguß oder Kunststoff. Auf die Möbelfläche 10 wird ein Verankerungsteil in Form einer Verankerungsplatte 16 geklebt. Zum Aufkleben der Verankerungsplatte 16 kann ein einseitig auf der Unterseite der Verankerungsplatte 16 aufgetragener Klebstoff dienen oder eine beidseitig klebende Folie. Die Halteplatte 14 und die Verankerungsplatte 16 sind flächengleich, so daß sich beim Aufsetzen der Halteplatte 14 auf die Verankerungsplatte 16 diese beiden Platten optisch zu einer einheitlichen Platte verbinden. Die Halteplatte 14 und die Verankerungsplatte 16 sind in ihren Flächenabmessungen so gewählt, daß sich eine ausreichende Abstützung der Stützsäule 12, insbesondere gegen Kippmomente, ergibt. Die Halteplatte 14 und die Verankerungsplatte 16 können dementsprechend dreieckige, rechteckige und insbesondere quadratische Formen aufweisen, wie dies in der Zeichnung dargestellt ist. Um eine größere Abstützungswirkung zu erhalten, ohne daß die nutzbare Möbelfläche 10 allzu stark eingeschränkt wird, können die Halteplatte 14 und die Verankerungsplatte 16 auch aus zwei oder mehr unter einem Winkel, vorzugsweise einem rechten Winkel, angeordneten, auf der Möbelfläche 10 aufliegenden Schienen gebildet sein.

Die Verankerungsplatte 16 besteht vorzugsweise aus einem elastischen Kunststoffmaterial, so daß eine Durchbiegung der Verankerungsplatte 16 möglich ist. Dadurch wird ein Ablösen der Verankerungsplatte 16 von der Möbelfläche 10 erleichtert. Die Verankerungsplatte 16 kann an einer ihrer Ecken von der Möbelfläche 10 abgehoben und dann unter Durchbiegung fortschreitend von der Möbelfläche 10 abgeschält werden. Die Verklebung der Verankerungsplatte 16 mit der Möbelfläche 10 wird dabei fortschreitend jeweils nur entlang einer Linie getrennt. Dadurch ist nur ein geringerer Kraftaufwand für das Ablösen erforderlich und die Möbelfläche 10 wird geschont. Vorzugsweise wird zum Festkleben der Verankerungsplatte 16 ein löslicher Klebstoff verwendet. Soll die Verankerungsplatte 16 abgelöst werden, so kann dabei zunächst ein Lösungsmittel appliziert werden, um das Ablösen zu erleichtern. Um das Lösungsmittel an die Klebefläche zu bringen, kann gegebenenfalls die Verankerungsplatte 16 aus einem porösen Material bestehen oder Durchbrechungen aufweisen, durch welche das Lösungsmittel an die Klebefläche gelangen kann.

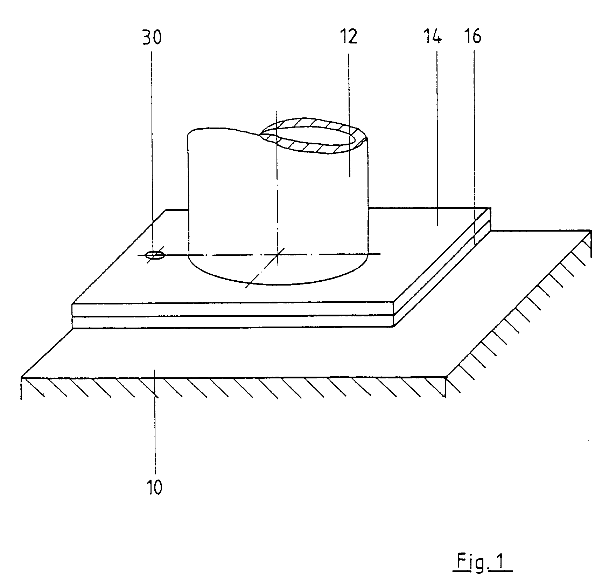

Die Halteplatte 14 wird an der Verankerungsplatte 16 formschlüssig befestigt. Hierzu weist die Halteplatte 14 an ihrer Unterseite Vorsprünge 18 auf, die formschlüssig in Aufnahmen 20 der Verankerungsplatte 16 eingreifen. Die Anzahl der Vorsprünge 18 und der Aufnahmen 20 hängt von der Größe und Form der Halteplatte 14 und der Verankerungsplatte 16 ab und auch von der durch die Stützsäule 12 aufzunehmenden Kippbelastung. In den in den Figuren 1 bis 11 dargestellten Ausführungsbeispielen sind die Halteplatte 14 und die Verankerungsplatte 16 rechteckig ausgebildet und jeder Ecke ist ein Vorsprung 18 und eine korrespondierende Aufnahme 20 zugeordnet.

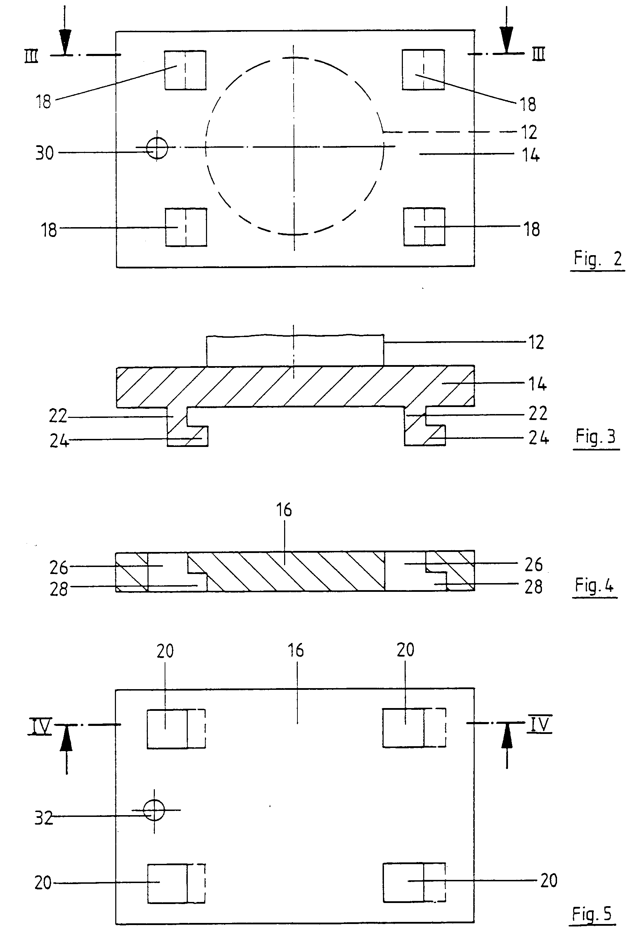

In dem Ausführungsbeispiel der Figuren 2 bis 5 bestehen die Vorsprünge 18 der Halteplatte 14 jeweils aus einem senkrecht von der Unterseite der Halteplatte 14 vorspringenden rechteckigen Block 22, an dessen unterem Ende an einer Seite eine Nase 24 parallel zur Ebene der Halteplatte vorspringt. Die Nasen 24 sämtlicher Vorsprünge 18 weisen in dieselbe Richtung.

Die mit den Vorsprüngen 18 korrespondierenden Aufnahmen 20 der Verankerungsplatte 16 weisen eine durch die Verankerungsplatte 16 hindurchgehende Einführungsöffnung 26 auf, deren Querschnitt dem Querschnitt der Fläche von Block 22 und Nase 24 der Vorsprünge 18 entspricht. An der Unterseite der Verankerungsplatte 16 schließt sich an die Einführungsöffnungen 26 jeweils eine Hinterschneidung 28 für die Nasen 24 der Vorsprünge 18 an. Die Hinterschneidungen 28 sind an der Unterseite der Verankerungsplatte 16 offen, so daß die Verankerungsplatte 16 mit den Hinterschneidungen 28 fertigungstechnisch leicht herstellbar ist.

Zur Befestigung der Halteplatte 14 an der Verankerungsplatte 16 wird die Halteplatte 14 auf die Verankerungsplatte 16 von oben aufgesetzt, wobei die Vorsprünge 18 in die Einführungsöffnungen 26 der Aufnahmen 20 eingeführt werden. Sobald die Halteplatte 14 auf der Verankerungsplatte 16 flächig aufliegt, wird die Halteplatte 14 auf der Verankerungsplatte 16 verschoben (in der Darstellung der Figuren 2 bis 5 nach rechts), so daß die Nasen 24 der Vorsprünge 18 in die Hinterschneidungen 28 der Aufnahmen 20 gelangen. Dadurch ist die Halteplatte 14 mit der Verankerungsplatte 16 verriegelt und kann nicht mehr von der Verankerungsplatte 16 abgehoben werden. Die Halteplatte 14 kommt in dieser Verriegelungsstellung mit der Verankerungsplatte 16 zur Deckung, wie dies in Figur 1 gezeigt ist.

Um die Halteplatte 14 in dieser Verriegelungsstellung zu arretieren, weisen die Halteplatte 14 eine vertikal durchgehende Bohrung 30 und die Verankerungsplatte 16 eine vertikale Bohrung 32 auf. Die Bohrungen 30 und 32 sind so angeordnet, daß sie in der Verriegelungsstellung von Halteplatte 14 und Verankerungsplatte 16 axial fluchten. Ein in die Bohrungen 30 und 32 eingesetzter Arretierstift arretiert die Halteplatte 14 in der Verriegelungsstellung gegen eine Verschiebung auf der Verankerungsplatte 16. Durch Herausziehen des Arretierstiftes kann die Arretierung wieder freigegeben werden, so daß die Halteplatte 14 wieder verschoben und von der Verankerungsplatte 16 abgehoben werden kann.

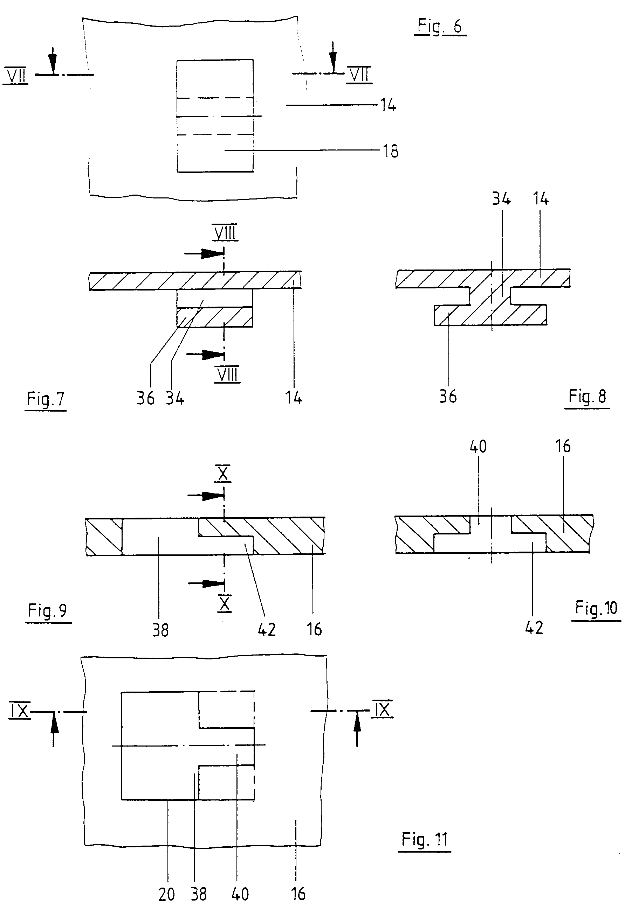

Die Figuren 6 bis 11 zeigen eine zweite Ausführung der Vorsprünge 18 und der Aufnahmen 20.

In dieser Ausführung bestehen die Vorsprünge 18 aus einem senkrecht an der Unterseite der Halteplatte 14 vorspringenden Steg 34 mit einem an dessen unterem Ende angeformten Flansch 36, der beidseitig parallel zur Ebene der Halteplatte 14 übersteht. Die Aufnahmen 20 weisen eine durch die Verankerungsplatte 16 durchgehende Einführungsöffnung 38 auf, deren Querschnitt dem Querschnitt des Flansches 36 entspricht. An die Einführungsöffnung 38 schließt sich ein Einschiebeschlitz 40 an, dessen Breite der Breite des Steges 34 entspricht. Der Einschiebeschlitz 40 verbreitert sich an der Unterseite der Verankerungsplatte 16 nach beiden Seiten zu einer Hinterschneidung 42 für den Flansch 36. Die Länge des Einschiebeschlitzes entspricht der Länge des Steges 34.

Wird die Halteplatte 14 zur Befestigung auf die Verankerungsplatte 16 aufgesetzt, so werden die Vorsprünge 18 in die Einführungsöffnungen 38 eingeführt, bis die Halteplatte 14 auf der Verankerungsplatte 16 aufsitzt. Dann wird die Halteplatte 14 auf der Verankerungsplatte 16 verschoben, wobei die Stege 34 der Vorsprünge 18 in die Einschiebeschlitze 40 und die Flansche 36 jeweils in die Hinterschneidungen 42 gelangen. Dadurch ist die Halteplatte 14 formschlüssig an der Verankerungsplatte 16 verriegelt. Auch in dieser Ausführung dient ein Arretierstift zur Arretierung der Halteplatte 14 in der Verriegelungsstellung.

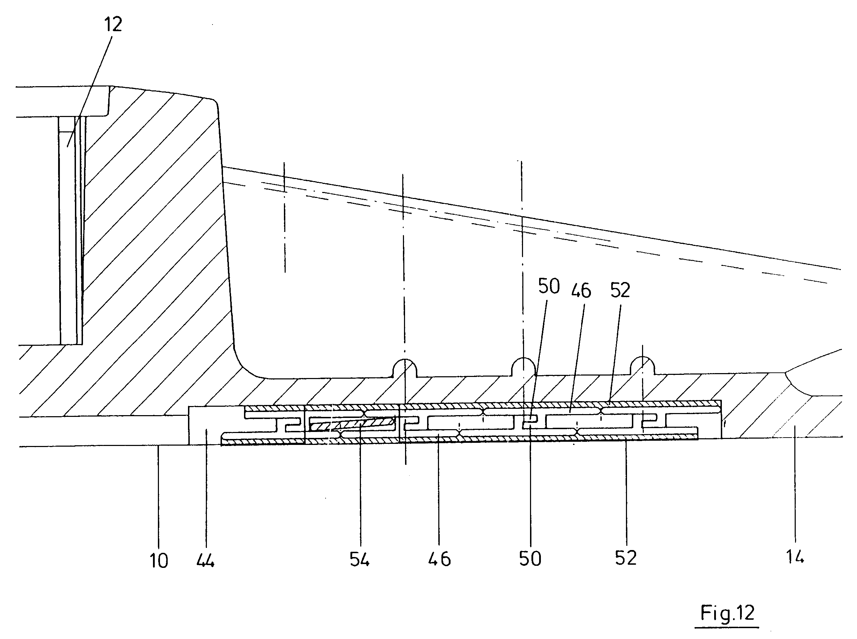

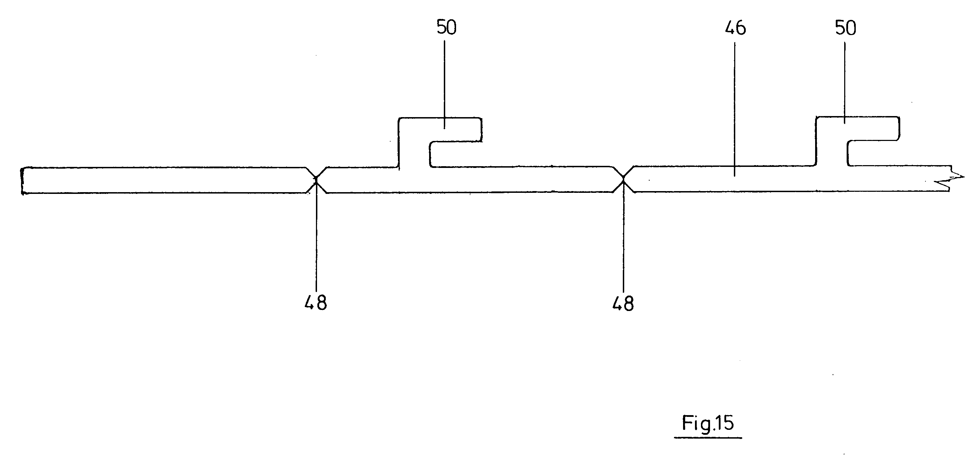

In den Figuren 12 bis 15 ist eine dritte Ausführung der Vorrichtung dargestellt.

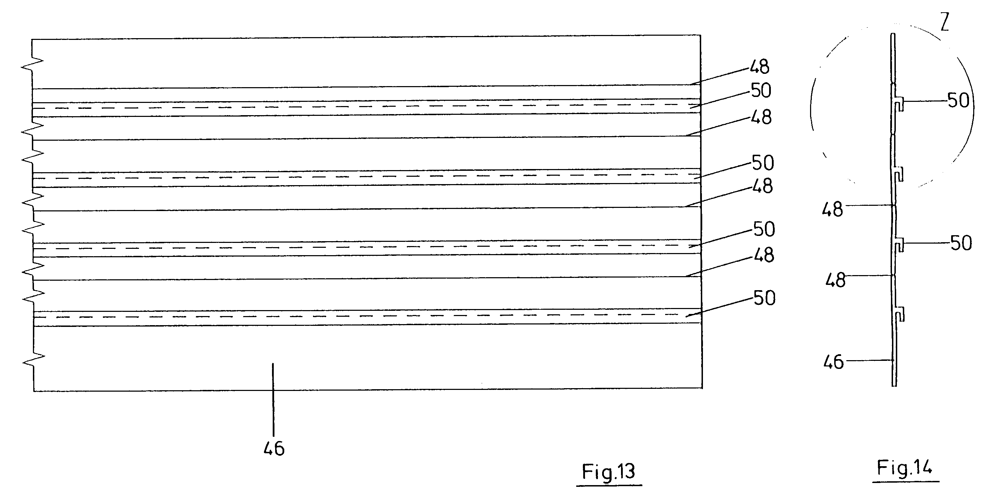

Wie der vertikale Teilschnitt der Figur 12 zeigt, liegt in dieser Ausführung die starre Halteplatte 14 zumindest in ihrem Umfangsbereich unmittelbar auf der Möbelfläche 10 auf. An ihrer Unterfläche weist die Halteplatte 14 eine flache Aussparung 44 auf, die zur verdeckten Aufnahme der Befestigung dient. Das Verankerungsteil ist in dieser Ausführung als extrudiertes Kunststoffprofil 46 ausgebildet, das in den Figuren 13 bis 15 im einzelnen dargestellt ist. Das Kunststoffprofil 46 weist eine geringe Stärke auf, so daß sich eine hohe Flexibilität ergibt. Die Stärke kann beispielsweise 1 mm bis 2 mm betragen. Die Breite des Kunststoffprofils 46 ist so gewählt, daß sich eine ausreichende Gesamtklebefläche ergibt. Gegebenenfalls können zwei oder mehr Kunststoffprofile 46 parallel nebeneinander an der Unterseite der Halteplatte 14 angeordnet sein. In einer Ausführung weist das Kunststoffprofil 46 beispielsweise eine Breite von ca. 100 mm auf. Das Kunststoffprofil 46 ist durch in Längsrichtung verlaufende parallele Sollbruchlinien 48 in schmale Streifen unterteilt, die in dem genannten Ausführungsbeispiel eine Breite von ca. 20 mm aufweisen. Im Bereich der Sollbruchlinien 48 ist das Kunststoffprofil 46 auf eine Stärke von Bruchteilen eines Millimeters verdünnt, so daß die einzelnen Streifen des Kunststoffprofils 46 an den Sollbruchlinien 48 zwar zusammengehalten werden, aber leicht von einander getrennt werden können. An der Oberseite des Kunststoffprofils 46 sind in dessen Längsrichtung durchgehende Profilwinkel 50 ausgebildet, die einen zur Ebene des Kunststoffprofils 46 parallelen freien Schenkel aufweisen, der eine Breite von einigen wenigen Milimetern (z.B. 3 mm bis 4 mm) aufweist. Der freie Schenkel weist einen lichten Abstand von der Oberfläche des Kunststoffprofils 46 auf, welcher seiner Materialstärke entspricht. Der lichte Abstand und die Materialstärke des freien Schenkels der Profilwinkel 50 entsprechen beispielsweise der Materialstärke des Kunststoffprofils 46 von 1 mm bis 2 mm. Im dargestellten Ausführungsbeispiel ist auf jedem Streifen des Kunststoffprofils 46 ein Profilwinkel 50 ausgebildet.

Zur Befestigung der Halteplatte 14 auf der Möbelfläche 10 wird ein Kunststoffprofil 46 mittels einer Klebstoffschicht 52 eines wieder lösbaren Klebstoffes auf die Möbelfläche 10 geklebt. Ein weiteres Stück des Kunststoffprofils 46 gleicher Länge wird um 180° verdreht mit einer entsprechenden Klebstoffschicht 52 in die Aussparung 44 an der Unterseite der Halteplatte 14 geklebt. Die Halteplatte 14 wird nun auf die Möbelfläche 10 so aufgesetzt, daß die Profilwinkel 50 des auf die Möbelfläche 10 aufgeklebten Kunststoffprofils 46 und die Profilwinkel 50 des an die Halteplatte 14 geklebten Kunststoffprofils 46 parallel gegeneinander versetzt sind. Nun wird die Halteplatte 14 quer zur Richtung der Kunststoffprofile 46 (in Figur 12 nach links) verschoben, so daß die Profilwinkel 50 der beiden Kunststoffprofile 46 einander mit ihren freien Schenkeln hintergreifen, wie dies aus Figur 12 zu erkennen ist. Die Halteplatte 14 ist dadurch formschlüssig an dem Kunststoffprofil 46 des Verankerungsteil festgelegt.

Wie Figur 12 zeigt, ist die Höhe der Aussparung 44 so gewählt, daß die Profilwinkel 50 der beiden Kunststoffprofile 46 ineinandergreifen, wenn die Halteplatte 14 mit ihrem Umfangsbereich auf der Möbelfläche 10 aufliegt.

Um die Halteplatte 14 in der in Figur 12 gezeigten verriegelten Stellung zu arretieren, in welcher die Kunststoffprofile 46 ineinandergreifen, wird in Längsrichtung der Kunststoffprofile ein Flachstab 54 in einen der Hohlkanäle geschoben, welche durch das untere und das obere Kunststoffprofil 46 und jeweils einen am unteren und einen am oberen Kunststoffprofil 46 ausgebildeten Profilwinkel 50 gebildet werden. Der Flachstab 54 hat eine Breite, die dem lichten Abstand zwischen diesen Profilwinkeln 50 entspricht, so daß der Flachstab 54 eine gegenseitige Verschiebung des an der Möbelfläche 10 und des an der Halteplatte 14 festgeklebten Kunststoffprofils 46 verhindert.

Um die Halteplatte 14 zu entfernen, wird der Flachstab 54 herausgezogen. Die Halteplatte 14 kann dann (in Figur 12 nach rechts) verschoben werden, so daß die Profilwinkel 50 der Kunststoffprofile 46 außer Eingriff kommen. Die Halteplatte 14 wird dann abgehoben. Das auf der Möbelplatte 10 festgeklebte Kunststoffprofil 46 kann nun von der Möbelfläche 10 abgezogen werden. Hierbei wird das Kunststoffprofil 46 streifenweise abgeschält, wobei es längs der Sollbruchlinie 48 getrennt wird. Das streifenweise Abziehen des Kunststoffprofils 46 erleichtert das Ablösen der Klebstoffschicht 52, da diese jeweils nur innerhalb einer kurzen quer zu dem Streifen des Kunststoffprofils 46 verlaufenden Trennlinie gelöst werden muß.

Für die belastbare Befestigung der Halteplatte 14 auf der Möbelfläche 10 wirkt dagegen die gesamte Klebefläche des Kunststoffprofils 46 bzw. die gesamte Klebefläche mehrerer nebeneinander angeordneter Kunststoffprofile 46. Die starre Ausbildung der Halteplatte 14 ermöglicht nämlich nur ein gleichzeitiges Abtrennen der Klebstoffschicht 52 über die gesamte Fläche sämtlicher Kunststoffprofile 46.

## Patentansprüche

1. Vorrichtung zur Befestigung einer belastbaren starren Halteplatte (14) an einer Möbelfläche (10) mittels einer Klebeverbindung (52), dadurch gekennzeichnet, daß ein Verankerungsteil (16, 46) auf der Möbelfläche (10) mittels der Klebeverbindung (52) befestigt wird und daß die Halteplatte (14) und das Verankerungsteil (16) bezüglich der zur Möbelfläche (10) senkrechten Richtung formschlüssig und trennbar ineinandergreifen.

2. Vorrichtung nach Anspruch 1, dadurch gekennzeichnet, daß das Verankerungsteil (16, 46) elastisch biegsam, verformbar oder flexibel ist.

3. Vorrichtung nach Anspruch 1 oder 2, dadurch gekennzeichnet, daß das Verankerungsteil (16, 46) plattenförmig ausgebildet ist, daß die Halteplatte (14) flächig auf das Verankerungsteil (16, 46) aufsetzbar ist und daß die einander berührenden Flächen der Halteplatte (14) und des Verankerungsteils (16, 46) miteinander korrespondierende Vorsprünge (18, 50) und Aufnahmen (20, 50) aufweisen, die formschlüssig ineinandergreifen.

4. Vorrichtung nach Anspruch 3, dadurch gekennzeichnet, daß die Vorsprünge (18, 50) senkrecht zur Ebene der einander berührenden Flächen angeordnet sind und zur formschlüssigen Verriegelung durch Verschiebung der Halteplatte (14) gegenüber dem Verankerungsteil (16, 46) Hinterschneidungen (28, 42, 50) der Aufnahmen (20, 50) hintergreifen.

5. Vorrichtung nach Anspruch 4, dadurch gekennzeichnet, daß die Halteplatte (14) und das Verankerungsteil (16, 46) in der Verriegelungsstellung gegen Verschiebung arretierbar sind.

6. Vorrichtung nach Anspruch 5, dadurch gekennzeichnet, daß die Halteplatte (14) und das Verankerungsteil (16) in der Verriegelungsstellung miteinander fluchtende Bohrungen (30, 32) aufweisen, in die ein Arretierstift einsetzbar ist.

7. Vorrichtung nach einem der vorhergehenden Ansprüche, dadurch gekennzeichnet, daß die Vorsprünge (18) und/oder Aufnahmen der Halteplatte (14) an deren Unterseite angeformt sind.

8. Vorrichtung nach einem der Ansprüche 1 bis 6, dadurch gekennzeichnet, daß die Vorsprünge und/oder Aufnahmen der Halteplatte (14) an einem an der Unterseite der Halteplatte (14) befestigbaren Teil (46) ausgebildet sind.

9. Vorrichtung nach einem der vorhergehenden Ansprüche, dadurch gekennzeichnet, daß das Verankerungsteil ein flaches plattenförmiges extrudierbares Kunststoffprofil (46) ist, das an seiner Oberseite einen oder mehrere in Profilrichtung durchgehende vorspringende Profilwinkel (50) aufweist.

10. Vorrichtung nach den Ansprüche 8 und 9, dadurch gekennzeichnet, daß ein mit dem Kunststoffprofil (46) des Verankerungsteils identisches Kunststoffprofil (46) um die Längsachse des Profils um 180° gedreht an der Unterseite der Halteplatte (14) befestigt ist und daß die Profilwinkel (50) der Kunststoffprofile (46) formschlüssig ineinandergreifen.

11. Vorrichtung nach Anspruch 9, dadurch gekennzeichnet, daß das Kunststoffprofil (46) des Verankerungsteils durch Sollbruchlinien (48) in leicht voneinander trennbare Längsstreifen unterteilt ist.

12. Vorrichtung nach einem der vorhergehenden Ansprüche, dadurch gekennzeichnet, daß das Verankerungsteil (16, 46) aus mehreren flächig nebeneinander angeordneten Verankerungsteilen besteht.

13. Vorrichtung nach einem der vorhergehenden Ansprüche, dadurch gekennzeichnet, daß die Klebeverbindung (52) aus einem wieder trennbaren Klebstoff besteht.

14. Vorrichtung nach einem der vorhergehenden Ansprüche, dadurch gekennzeichnet, daß das Verankerungsteil (16) durchlässig für ein Lösungsmittel für die Klebeverbindung ist.

## Claims

1. A device for attaching a loadable rigid retention plate (14) to a furniture surface (10) by means of an adhesive bonded joint (52),
**characterised in that** an anchoring part (16, 46) is attached to the furniture surface (10) by means of the adhesive bonded joint (52),
**and in that** the retention plate (14) and the anchoring part (16) engage in one another in form-fit and separable manner in relation to the direction perpendicular to the furniture surface (10).

2. A device according to Claim 1,
**characterised in that** the anchoring part (16, 46) is elastically pliable, deformable or flexible.

3. A device according to Claim 1 or 2,
**characterised in that** the anchoring part (16, 46) has a plate-shaped construction,
**in that** the retention plate (14) can be placed flat onto the anchoring part (16, 46),
**and in that** the faces of the retention plate (14) and of the anchoring part (16, 46) touching one another have projections (18, 50) and apertures (20, 50) corresponding with one another, which engage in one another with form fit.

4. A device according to Claim 3,
**characterised in that** the projections (18, 50) are disposed perpendicular to the plane of the touching faces and for form-fit locking by displacement of the retention plate (14) in relation to the anchoring part (16, 46) engage behind undercuts (28, 42, 50) in the apertures (20, 50).

5. A device according to Claim 4,
**characterised in that** the retention plate (14) and the anchoring part (16, 46) can be prevented from being displaced in the locked position.

6. A device according to Claim 5,
**characterised in that** the retention plate (14) and the anchoring part (16) have bores (30, 32) aligned with one another in the locked position, into which a retention pin can be inserted.

7. A device according to one-of the preceding Claims,
**characterised in that** the projections (18) and/or apertures of the retention plate (14) are moulded on their underside.

8. A device according to one of Claims 1 to 6,
**characterised in that** the projections and/or apertures of the retention plate (14) are constructed on a part (46) which can be attached to the underside of the retention plate (14).

9. A device according to one of the preceding Claims,
**characterised in that** the anchoring part is a flat plate-shaped extrudable plastic profile (46), which on its upper side has one or more protruding profile angles (50) continuous in the profile direction.

10. A device according to Claims 8 and 9,
**characterised in that** a plastic profile (46) identical to the plastic profile (46) of the anchoring part is attached, rotated by 180° around the longitudinal axis of the profile, to the underside of the retention plate (14),
**and in that** the profile angles (50) of the plastic profiles (46) engage in one another with form-fit.

11. A device according to Claim 9,
**characterised in that** the plastic profile (46) of the anchoring part is divided by predetermined breaking lines (48) into longitudinal strips easily separable from one another.

12. A device according to one of the preceding Claims,
**characterised in that** the anchoring part (16, 46) consists of several anchoring parts disposed flat next to one another.

13. A device according to one of the preceding Claims,
**characterised in that** the adhesive bonded joint (52) is made of a separable adhesive.

14. A device according to one of the preceding Claims,
**characterised in that** the anchoring part (16) is pervious to a solvent of the adhesive bonded joint.

## Revendications

1. Dispositif de fixation d'un plateau porteur rigide (14) sur la surface (10) d'un meuble par une liaison adhésive (52), caractérisé en ce qu'une pièce d'ancrage (16, 46) est fixée sur la surface (10) par une liaison adhésive (52), le plateau porteur (14) et la pièce d'ancrage (16) étant en prise l'un dans l'autre, avec verrouillage séparable réalisé par combinaison de formes perpendiculairement à la surface (10).

2. Dispositif selon la revendication 1, caractérisé en ce que la pièce d'ancrage (16, 46) peut plier élastiquement, se déformer ou fléchir.

3. Dispositif selon la revendication 1 ou 2, caractérisé en ce que la pièce d'ancrage (16, 46) a la forme d'une plaque, que le plateau porteur (14) peut être posé à plat sur la pièce d'ancrage (16, 46),et que les surfaces en contact du plateau (14) et de la pièce (16, 46) présentent des saillies (18, 50) et des logements (20, 50) en correspondance, engagés les uns dans les autres avec verrouillage par combinaison de formes.

4. Dispositif selon la revendication 3, caractérisé en ce que les saillies (18, 50) sont perpendiculaires au plan défini par les surfaces en contact et viennent en prise par derrière avec des contredépouilles (28, 42, 50) des logements (20, 50) pour assurer, par coulissement du plateau (14) par rapport à la pièce d'ancrage (16, 46), le verrouillage par combinaison de formes.

5. Dispositif selon la revendication 4, caractérisé en ce que le plateau porteur (14) et la pièce d'ancrage (16, 46) peuvent être, en position de verrouillage, bloqués de manière à ne pas pouvoir coulisser.

6. Dispositif selon la revendication 5, caractérisé en ce que le plateau porteur (14) et la pièce d'ancrage (16) présentent, lorsqu'ils sont en position de verrouillage, des perçages alignés (30, 32) dans lesquels on peut engager une broche d'arrêt.

7. Dispositif selon une des revendications précédentes, caractérisé en ce que les saillies (18) et/ou les logements du plateau porteur (14) sont moulés sur la face inférieure.

8. Dispositif selon une des revendications 1 à 6, caractérisé en ce que les saillies et/ou les logements du plateau porteur (14) sont portés par une pièce (46) qui peut être fixée sur la face inférieure du plateau porteur (14).

9. Dispositif selon une des revendications précédentes, caractérisé en ce que la pièce d'ancrage est un profilé (46) en matière plastique extrudée, en forme de plaque plane, portant sur sa face supérieure un ou plusieurs angles de profilé (50), en saillie et continus selon la direction du profilé.

10. Dispositif selon les revendications 8 et 9, caractérisé en ce qu'un profilé (46), identique à celui porté par la pièce d'ancrage mais tourné de 180° autour de son axe longitudinal, est fixé sur la face inférieure du plateau porteur (14), les angles de profilé (50) de ces divers profilés (46) étant en prise les uns dans les autres, avec verrouillage par combinaison de formes.

11. Dispositif selon la revendication 9, caractérisé en ce que le profilé en matière plastique (46) de la pièce d'ancrage peut être divisé en bandes longitudinales facilement séparables le long des lignes destinées à la rupture (48).

12. Dispositif selon une des revendication précédentes, caractérisé en ce que la pièce d'ancrage (16, 46) est constituée de plusieurs pièces élémentaires disposées à plat et côte à côte.

13. Dispositif selon une des revendications précédentes, caractérisé en ce que la liaison par collage (52) est assurée par un adhésif ultérieurement détachable.

14. Dispositif selon une des revendications précédentes, caractérisé en ce que la pièce d'ancrage (16) peut laisser passer un agent dissolvant de la colle de liaison.
